(19) Europäisches Patentamt
European Patent Office
Office européen des brevets

(11) EP 3 591 391 A1

(12) EUROPEAN PATENT APPLICATION
published in accordance with Art. 153(4) EPC

(43) Date of publication:
08.01.2020 Bulletin 2020/02

(51) Int Cl.:
G01N 27/447 (2006.01)    G01N 37/00 (2006.01)

(21) Application number: 18761639.6

(22) Date of filing: 09.02.2018

(86) International application number:
PCT/JP2018/004621

(87) International publication number:
WO 2018/159264 (07.09.2018 Gazette 2018/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 28.02.2017 JP 2017037652

(71) Applicant: The University of Tokyo
Bunkyo-ku
Tokyo 113-8654 (JP)

(72) Inventors:
• ICHIKI, Takanori
Tokyo 113-8654 (JP)
• ONIYANAGI, Satoshi
Tokyo 113-8654 (JP)

(74) Representative: Pichat, Thierry et al
Ernest Gutmann - Yves Plasseraud S.A.S.
66, rue de la Chaussée d'Antin
75009 Paris (FR)

(54) ELECTROPHORETIC ANALYSIS CHIP AND ELECTROPHORETIC ANALYSIS APPARATUS

(57) The present invention provides an electrophoretic analysis chip with which analysis of a sample can be performed with high accuracy in a short amount of time. The present invention includes a first reservoir (11) and a second reservoir (21) provided on a base material (10); a phoresis flow path (33) which connects the first reservoir with the second reservoir and enables phoresis of the sample; and a liquid level adjusting flow path (15) having a cross-sectional area greater than that of the phoresis flow path, the liquid level adjusting flow path connecting the first reservoir with the second reservoir and enabling adjustment of a difference in level between a liquid held in the first reservoir and a liquid held in the second reservoir.

FIG. 2

## Description

[Field of the Invention]

The present invention relates to an electrophoretic analysis chip and an electrophoretic analysis apparatus.

Priority is claimed on Japanese Patent Application No. 2017-037652, filed February 28, 2017, the content of which is incorporated herein by reference.

[Background Art]

In analysis of a sample, for example, an analysis chip including two reservoirs in which electrodes are disposed and a micro-flow path which connects the two reservoirs is used. The analysis is performed, for example, by measuring a sample introduced into the micro-flow path through the reservoirs.

[Citation List]

[Patent Literature]

[Patent Document 1]
U.S. Patent No. 5,482,608

[Summary of Invention]

[Technical Problem]

However, the following problems are present in the related art described above.

When liquid levels in the two reservoirs are different from each other, a flow in the sample in the micro-flow path may be generated due to a hydrostatic flow. In the measurement of a sample, when the sample moves in the micro-flow path before a voltage is applied to the electrode, highly accurate measurement may be hindered.

The present invention has been made in consideration of the above-described points, and an object thereof is to provide an electrophoretic analysis chip and an electrophoretic analysis apparatus capable of performing analysis of a sample with high accuracy.

[Solution to Problem]

According to a first aspect of the present invention, an electrophoretic analysis chip includes a first reservoir and a second reservoir provided on a base material, a phoresis flow path through which the first reservoir and the second reservoir are connected and in which phoresis of a sample is enabled, and a liquid level adjusting flow path which has a cross-sectional area larger than that of the phoresis flow path and is capable of adjusting a difference in liquid levels between a liquid held in the first reservoir and a liquid held in the second reservoir by connecting the first reservoir with the second reservoir.

According to a second aspect of the present invention, an electrophoretic analysis chip which analyzes a sample includes a laminated structure constituted by a phoresis member having a first reservoir, a second reservoir and a phoresis flow path which connects the first reservoir with the second reservoir and in which phoresis of the sample is performed, and a substrate which supports the phoresis member, wherein the phoresis member has a liquid level adjusting flow path which has a cross-sectional area larger than that of the phoresis flow path and is capable of adjusting a difference in liquid levels between a liquid held in the first reservoir and a liquid held in the second reservoir by connecting the first reservoir with the second reservoir.

According to a third aspect of the present invention, an electrophoretic analysis apparatus includes the electrophoretic analysis chip of the first or second aspect of the present invention, and a measurement unit which measures a zeta potential of the sample.

[Advantageous Effects of Invention]

In the present invention, analysis of a sample can be performed in a short amount of time with high accuracy.

[Brief Description of Drawings]

FIG. 1A is a plan view showing an electrophoretic analysis apparatus 400 according to an embodiment.
FIG. 1B is a cross-sectional view taken along line A-A in FIG. 1A.
FIG. 2 is an enlarged perspective view of an electrophoretic unit 310.
FIG. 3 is a cross-sectional view taken along line B-B in FIG. 2.
FIG. 4A is a diagram showing a relationship between a voltage and a current when HEPES is energized.
FIG. 4B is a diagram showing a relationship between a voltage and a current when the PBS is energized.
FIG. 5A is a view showing a relationship between electrophoretic mobility and the number of particles in a parallel flow path type electrophoretic analysis chip.
FIG. 5B is a view showing the relationship between the electrophoretic mobility and the number of particles in the parallel flow path type electrophoretic analysis chip.
FIG. 6A is a view showing the relationship between electrophoretic mobility and the number of particles in a single flow path type electrophoretic analysis chip.
FIG. 6B is a view showing the relationship between electrophoretic mobility and the number of particles in the single flow path type electrophoretic analysis chip.

FIG. 7A is a view showing the relationship between the electrophoretic mobility and the number of particles in the parallel flow path type electrophoretic analysis chip.

FIG. 7B is a view showing the relationship between the electrophoretic mobility and the number of particles in the parallel flow path type electrophoretic analysis chip.

FIG. 8A is a view showing the relationship between electrophoretic mobility and the number of particles in the single flow path type electrophoretic analysis chip.

FIG. 8B is a view showing the relationship between electrophoretic mobility and the number of particles in the single flow path type electrophoretic analysis chip.

FIG. 9 is a cross-sectional view showing a modified example of the electrophoretic analysis chip 300.

[Description of Embodiments]

In one embodiment, the present invention provides an electrophoretic analysis chip for use in analyzing a sample. Examples of the sample include cells, extracellular vesicles, microparticles, latex particles (including latex particles modified with an antibody and further modified with cells), polymeric micelles, and the like. In this embodiment, a case in which an extracellular vesicle analysis chip for analyzing extracellular vesicles is used as a electrophoretic analysis chip will be described. In this specification, extracellular vesicles are lipid vesicles including exosomes, apoptotic bodies, microvesicles and the like. Hereinafter, the extracellular vesicle analysis chip (the electrophoretic analysis chip) according to the embodiment will be described by taking the case of analyzing exosomes as an example.

[Exosomes]

Exosomes are lipid vesicles about 30 to 100 nm in diameter and are secreted as fusions of endosomes and cell membranes from various cells such as tumor cells, dendritic cells, T cells, B cells, and the like into body fluids such as blood, urine, and saliva.

Abnormal cells such as cancer cells present in vivo express specific proteins on their cell membranes. Exosomes are secretions of cells and express proteins derived from cells as a secretory source on their surfaces.

Therefore, it is possible to detect abnormalities in cells of the secretory source by analyzing the proteins expressed on the surfaces of exosomes. Here, the surfaces of exosomes are membrane surfaces of lipid vesicles secreted from cells and are portions in which the secreted exosomes are in contact with the environment in a living body.

Since exosomes are detected in circulating blood in vivo, abnormalities in the living body can be detected without a biopsy test by analyzing exosomes.

[Analysis of exosomes]

The analysis of exosomes using an extracellular vesicle analysis chip can be performed, for example, as follows. First, an exosome to be detected is purified. Next, the exosome is brought into contact with a specific binding substance. Here, the specific binding substance is a substance capable of specifically binding to a molecule present on a surface of the exosome, and the details thereof will be described later. Next, a zeta potential of the exosome is measured and analyzed using an extracellular vesicle analysis chip. This analysis is applicable not only to exosomes but also to analysis of extracellular vesicles in general.

(Specific binding substance)

Specific binding substances include, for example, antibodies, modified antibodies, aptamers, ligand molecules and the like. Examples of the antibodies include IgG, IgA, IgD, IgE, IgM, and the like. Examples of IgG include IgG1, IgG2, IgG3, IgG4, and the like. Examples of IgA include IgA1, IgA2, and the like. Examples of IgM include IgMl, IgM2, and the like. Examples of the modified antibodies include Fab, F(ab')2, scFv, and the like. Examples of the aptamers include a peptide aptamer, a nucleic acid aptamer, and the like. Examples of the ligand molecules include a ligand of a receptor protein when a molecule to be detected present on the surface of the exosome is the receptor protein. For example, when the molecule present on the surface of the exosome is an interleukin, examples of the ligand molecules include G protein and the like.

In addition, the specific binding substance may be labeled with a labeling substance. Examples of the labeling substance include charged molecules such as biotin, avidin, streptavidin, neutravidin, glutathione-S-transferase, glutathione, fluorescent dyes, polyethylene glycol, and mellitic acid.

(Purification of exosomes)

Each process of this analysis will be described. First, exosomes are purified from a sample containing the exosomes. Examples of the sample include blood, urine, breast milk, bronchoalveolar lavage fluid, amniotic fluid, malignant effusion fluid, saliva, cell culture fluid and the like according to a purpose thereof. Among them, it is easy to purify exosomes from blood and urine.

Methods for purifying exosomes include methods using ultracentrifugation, ultrafiltration, continuous flow electrophoresis, chromatography, a micro-total analysis system (μ-TAS) device, and the like.

(Reaction between exosomes and specific binding substance)

Next, the exosomes are brought into contact with a specific binding substance (antibody, aptamer, or the like). When the molecule to be detected is present on the surfaces of the exosomes, a specific binding substance-exosome complex is formed. For example, abnormalities associated with diseases such as cancer, obesity, diabetes, neurodegenerative diseases and the like can be detected by appropriately selecting the specific binding substance. Details will be described later.

(Measurement of zeta potential)

As an example, a case in which an antibody is used as the specific binding substance will be described. After the exosomes are reacted with the antibodies, the zeta potential of the exosomes reacted with the antibodies is measured. The zeta potential is a surface charge of microparticles in a solution. For example, the antibodies are positively charged while the exosomes are negatively charged. Therefore, the zeta potential of an antibody-exosome complex is positively shifted when compared with that of the exosome alone. Accordingly, expression of antigens on the membrane surfaces of the exosomes can be detected by measuring the zeta potential of the exosomes reacted with the antibodies. This applies not only to the antibodies but also to a positively charged specific binding substance.

The zeta potential $\zeta$ of the exosomes can be calculated, for example, by performing electrophoresis of the exosomes in a micro-flow path of the extracellular vesicle analysis chip, optically measuring an electrophoretic velocity S of the exosomes and then using the Smoluchowski equation shown as the following Equation (1) on the basis of the measured electrophoretic velocity S of the exosomes.

$$U=(\epsilon/\eta)\zeta \ldots(1)$$

In Equation (1), U is the electrophoretic mobility of the exosomes to be measured, and $\epsilon$ and $\eta$ are a dielectric constant and a viscosity coefficient of a sample solution, respectively. Further, the electrophoretic mobility U can be calculated by dividing the electrophoretic velocity S by an electric field intensity in the micro-flow path.

The electrophoretic velocity S of the exosomes can be measured by, for example, performing electrophoresis of the exosomes in the micro-flow path of the extracellular vesicle analysis chip, for example, applying laser light to the exosomes flowing in the micro-flow path, and then acquiring particle images due to Rayleigh scattered light. Examples of the laser light include that having a wavelength of 488 nm and an intensity of 50 mW.

[Electrophoretic analysis apparatus]

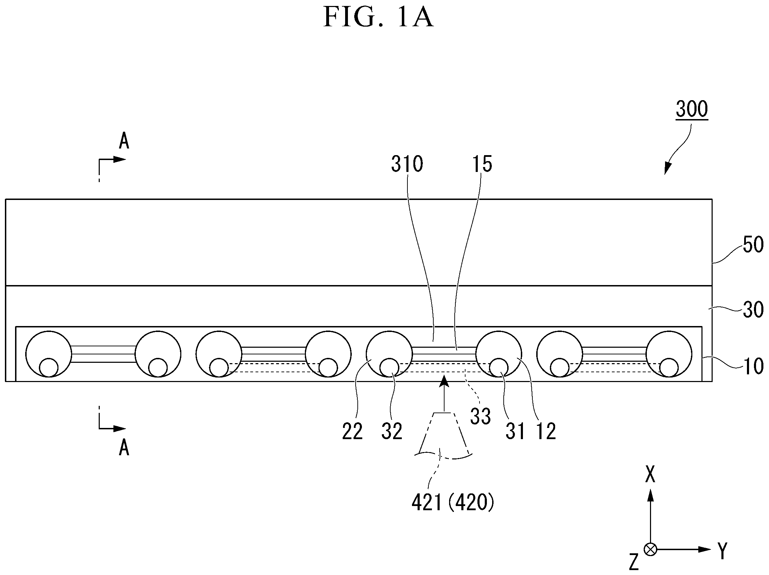

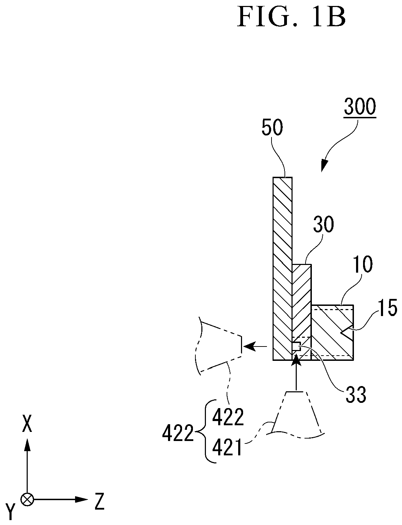

FIG. 1A is a plan view showing an electrophoretic analysis apparatus 400 according to one embodiment. FIG. 1B is a sectional view taken along line A-A in FIG. 1A.
The electrophoretic analysis apparatus 400 includes an electrophoretic analysis chip 300 and a measurement unit 420.

[Electrophoretic analysis chip]

In the electrophoretic analysis chip 300 according to the embodiment, a plurality of (four in FIG. 1A) electrophoretic units 310 having the same constitution and capable of measuring a sample are disposed in the Y direction.
The electrophoretic analysis chip 300 includes a reservoir member 10, a flow path member 30, a substrate 50, and electrodes 13 and 14 which are sequentially laminated. The reservoir member 10 and the flow path member 30 constitute a phoresis member. For example, the electrophoretic analysis chip 300 in the embodiment is a laminated structure (laminated body) including at least the reservoir member 10, the flow path member 30, and the substrate 50. In this case, the laminated structure of the electrophoretic analysis chip 300 is a three-layer structure. Further, for example, the laminated structure of the electrophoretic analysis chip 300 is formed by bonding the reservoir member 10, the flow path member 30, and the substrate 50 to each other.
In the following description, a direction in which the reservoir member 10, the flow path member 30, and the substrate 50 are sequentially laminated is referred to as a Z direction (a Z axis), a length direction of the reservoir member 10, the flow path member 30, and the substrate 50 is referred to as a Y direction (a Y axis), and a width direction of the reservoir member 10, the flow path member 30, and the substrate 50 orthogonal to the Z direction and the Y direction is referred to as an X direction (an X axis).
A material for forming the reservoir member 10 is not particularly limited. The material of the reservoir member 10 is, for example, an elastomer and may include silicone rubber, polydimethylsiloxane (PDMS) and the like.

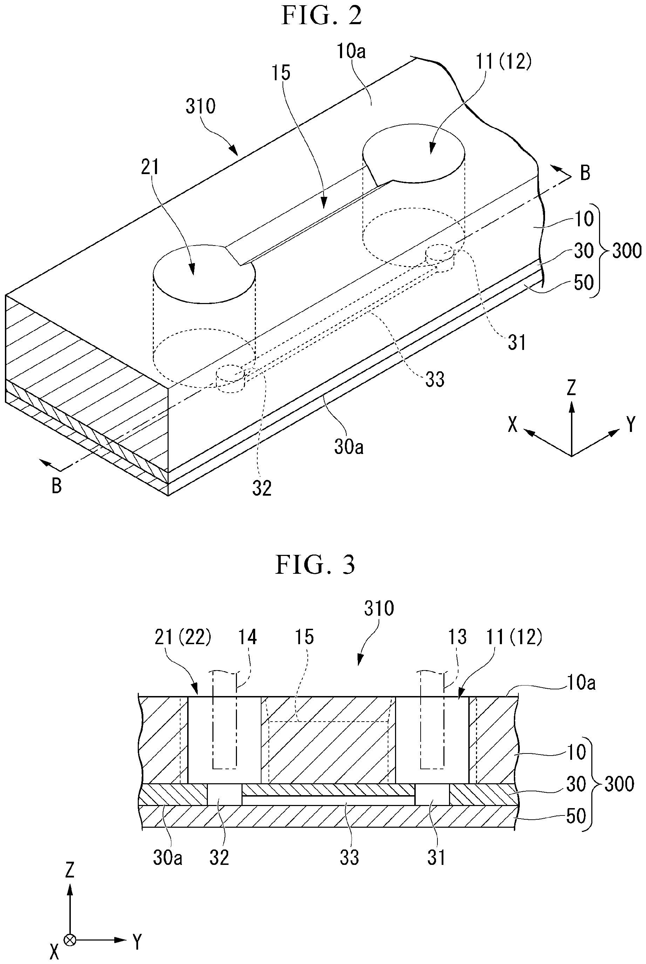

FIG. 2 is an enlarged perspective view of the electrophoretic unit 310. FIG. 3 is a cross-sectional view taken along line B-B in FIG. 2. FIG. 3 is a cross-sectional view parallel to a YZ plane including a line segment connecting a center of a first holding space 31 and a center of a second holding space 32 which will be described later.
The reservoir member 10 includes a first reservoir 11, a second reservoir 21, and a liquid level adjusting flow path 15. The first reservoir 11 and the second reservoir 21 are disposed at an interval in the Y direction which is a flow path direction of a phoresis flow path 33 that will be described later. As an example, a sample (for example, exosomes to be analyzed) is introduced into one of the first reservoir 11 and the second reservoir 21, and a buffer solution is introduced into the other of the first reservoir 11 and the second reservoir 21.

The first reservoir 11 includes a first holding space 12 which has a circular cross section in a plane parallel to an XY plane and extends in the Z direction. The first holding space 12 passes through the reservoir member 10 in the Z direction. The second reservoir 21 includes a second holding space 22 which has a circular cross section in a plane parallel to the XY plane and extends in the Z direction. The second holding space 22 passes through the reservoir member 10 in the Z direction.

The liquid level adjusting flow path 15 is a flow path for adjusting a difference in liquid levels between a liquid held in the first reservoir 11 and a liquid held in the second reservoir 21. The liquid level adjusting flow path 15 extends in the Y direction and connects the first reservoir 11 with the second reservoir 21. A position of the liquid level adjusting flow path 15 on the XY plane is on a line which connects a center position of the first holding space 12 with a center position of the second holding space 22. The liquid level adjusting flow path 15 is formed with a V-shaped cross section which opens toward an upper surface 10a of the reservoir member 10. The width of the liquid level adjusting flow path 15 on the upper surface 10a is smaller than diameters of the first holding space 12 and the second holding space 22. The liquid level adjusting flow path 15 connects and communicates an upper end of the first holding space 12 with an upper end of the second holding space 22.

The electrode 13 is disposed in the first holding space 12 in the Z direction. The electrode 14 is disposed in the second holding space 22 in the Z direction.

The flow path member 30 includes a first holding space 31, a second holding space 32, and the phoresis flow path 33. The first holding space 31 is formed with a circular cross section and extends in the Z direction. The first holding space 31 passes through the flow path member 30 in the Z direction. The diameter of the first holding space 31 is smaller than the diameter of the first holding space 12. The first holding space 31 is connected to the first holding space 12. A center position of the first holding space 31 in the XY plane is disposed to be biased to the -X side with respect to the center position of the first holding space 12. The second holding space 32 is formed with a circular cross section and extends in the Z direction. The second holding space 32 passes through the flow path member 30 in the Z direction. The diameter of the second holding space 32 is smaller than the diameter of the second holding space 22. The second holding space 32 is connected to the second holding space 22. A center position of the second holding space 32 in the XY plane is disposed to be biased to the -X side with respect to the center position of the second holding space 22.

The phoresis flow path 33 is, for example, a milli-flow path or a micro-flow path. The phoresis flow path 33 is used to perform electrophoresis of a specific binding substance-extracellular vesicle complex (as one example, an antibody-exosome complex) formed by the specific binding substance that specifically binds to an extracellular vesicle or a molecule present on the surface of the extracellular vesicle interacting with the extracellular vesicle. As an example, the specific binding substance may include an antibody, an aptamer, or a combination thereof. The aptamer is, for example, a nucleic acid aptamer, a peptide aptamer or the like. Examples of the molecules recognized by the specific binding substance include antigens, membrane proteins, nucleic acids, sugar chains, glycolipids and the like.

The phoresis flow path 33 is provided in the Y direction to connect the first holding space 31 and the second holding space 32 to the surface 30a of the flow path member 30 facing the substrate 50. The phoresis flow path 33 has, for example, a rectangular cross section with a width of 200 $\mu$m and a height of 50 $\mu$m and is formed to have a size of about 1000 $\mu$m in length. A cross-sectional area of the phoresis flow path 33 is smaller than a cross-sectional area of the liquid level adjusting flow path 15. In other words, the cross-sectional area of the liquid level adjusting flow path 15 is larger than the cross-sectional area of the phoresis flow path 33. Therefore, the liquid level adjusting flow path 15 has a high conductance with respect to a liquid flow as compared with the phoresis flow path 33. As an example, the flow path member 30 is formed of PDMS, similarly to the reservoir member 10. The flow path member 30 is preferably transparent to the laser light of the measurement unit 420 which will be described later.

The substrate 50 supports the flow path member 30 from the -Z side. As an example, the substrate 50 is formed of PDMS, similarly to the reservoir member 10 and the flow path member 30. The substrate 50 is preferably transparent to the laser light of the measurement unit 420 which will be described later.

The reservoir member 10, the flow path member 30, and the substrate 50 are superimposed so that surfaces thereof on the -X side are flush with each other. The flow path member 30 is formed to extend to both sides in the Y direction and to the +X side with respect to an end edge of the reservoir member 10. The substrate 50 is formed to extend on both sides in the Y direction and the +X side with respect to an end edge of the flow path member 30.

As an example, the above-described reservoir member 10 is manufactured by mixing and degassing a PDMS (SILPOT 184 manufactured by Dow Corning Toray Co., Ltd.) main agent and a cross-linking agent in a ratio of 10:1, casting PDMS in a resin mold and then solidifying by heating at 80 °C for 7 hours. As an example, the flow path member 30 can be manufactured by pouring PDMS having the same composition as the PDMS used in the manufacturing of the reservoir member 10 into a glass material having a flow path mold formed in a cube having a width of 200 μm and a length of 40 mm, heating and curing it and then separating it from the flow path mold after curing. As an example, the electrophoretic analysis chip 300 in which the first holding spaces 12 and 31 of the first reservoir 11 and the second holding spaces 22 and 32 of the second reservoir 21 are connected via the phoresis flow path 33 is manufactured by respectively irradiating the reservoir member 10, the flow path member 30, and the substrate 50 with plasma and then attaching them to each other.

Although not shown, a cover which covers an opening portion of the first holding space 12, an opening portion of the second holding space 22, and the liquid level adjusting flow path 15 may be provided at the electrophoretic analysis chip 300. However, the cover is configured not to seal the opening portion of the first holding space 12, the opening portion of the second holding space 22, and the liquid level adjusting flow path 15 but to cover the opening portion of the first holding space 12, the opening portion of the second holding space 22, and the liquid level adjusting flow path 15 in the state in which they are open to the atmosphere. Since the opening portion of the first holding space 12, the opening portion of the second holding space 22, and the liquid level adjusting flow path 15 are covered by the cover, it is possible to prevent contamination of a sample by a surrounding environment or contamination of the surrounding environment by the sample.

Referring back to FIG. 1A, the measurement unit 420 includes a light irradiation unit 421, a detection unit 422, and a mobility calculation unit (not shown). The light irradiation unit 421 irradiates the phoresis flow path 33 with light from the -X side via a through hole 16. The light to be irradiated is, for example, laser light. The detection unit 422 has, for example, an objective lens and a light receiving sensor (for example, a high sensitivity camera). The detection unit 422 is disposed on the -Z side of the electrophoretic analysis chip 300. The detection unit 422 detects light (scattered light) emitted from the light irradiation unit 421 and reflected by the sample in the phoresis flow path 33. The mobility calculation unit calculates the zeta potential from the mobility of the sample on the basis of the detection result of the detection unit 422. It is possible to calculate the zeta potential for each electrophoretic unit 310 by moving the electrophoretic analysis chip 300 in the Y direction and making the electrophoretic unit 310 face the light irradiation unit 421 and the detection unit 422.

Next, a procedure for measuring and analyzing a sample using the above-described electrophoretic analysis chip 300 will be described.

The sample is an exosome. The exosome to be analyzed may be one obtained by being reacted with a specific binding substance. The exosome is, for example, one extracted from culture supernatant or serum, and the sample liquid is an exosome suspension in which the exosome is suspended in a buffer solution.

The buffer solution preferably has a conductivity of 17800 μS / cm or less. When the conductivity of the buffer solution exceeds the above-described upper limit value, an excessive current may flow in the liquid level adjusting flow path 15, and thus an undesirable degree of Joule heat generation or electrolysis of the buffer solution may occur.

First, a liquid containing a sample (hereinafter, appropriately referred to as a sample liquid) is dropped, for example, into the first holding space 12 of the first reservoir 11. At this time, the sample liquid is introduced into the first holding space 12 through the opening portion (a sample inlet) of the first holding space 12 in the upper surface 10a. Then, the sample liquid is introduced into the phoresis flow path 33, for example, by inserting a syringe into the second holding space 22 of the second reservoir 21 and aspirating the sample liquid.

Next, the same sample liquid as the sample liquid dropped into the first holding space 12 of the first reservoir 11 is dropped into the second holding space 22 of the second reservoir 21, and the first holding spaces 12 and 31 and the second holding spaces 22 and 32 are connected by the sample liquid with the phoresis flow path 33 interposed therebetween. Further, the sample liquid is introduced at a liquid level to be loaded into the liquid level adjusting flow path 15. More specifically, the sample liquid is introduced into the liquid level adjusting flow path 15 so that a cross-sectional area of the sample liquid introduced into the liquid level adjusting flow path 15 is larger than a cross-sectional area of the sample liquid introduced into the phoresis flow path 33.

Here, when the liquid level of the sample liquid held in the second holding spaces 22 and 32 is higher than the liquid level of the sample liquid held in the first holding spaces 12 and 31, in the phoresis flow path 33, the sample liquid containing the sample may flow from the second holding spaces 22 and 32 toward the first holding spaces 12 and 31 by hydrostatic pressure. In the embodiment, even when a difference in liquid level between the liquid level of the sample liquid held in the second holding spaces 22 and 32 and the liquid level of the sample liquid held in the first holding spaces 12 and 31 occurs, the difference in liquid level is eliminated (adjusted) by the sample liquid introduced into the liquid level adjusting flow path 15 flowing to the holding space on the side in which the liquid level is low. As a result, it is possible to prevent generation of a hydrostatic pressure flow generated in the phoresis flow path 33 and to improve the accuracy of the zeta potential measurement.

Subsequently, a voltage is applied between the electrodes 13 and 14 to perform the electrophoresis of the exosome. During the electrophoresis, the phoresis flow path 33 is irradiated with laser light, the scattered light through the exosome, which is the light emitted from the phoresis flow path 33, is collected using the objective lens or the like, and an image of the exosome or the specific binding substance-exosome complexes is taken using the light receiving sensor. The magnification of the objective lens is, for example, about 60 times.

Subsequently, the mobility calculation unit calculates the electrophoretic velocity S of the exosome or the specific binding substance-exosome complex based on the photographed image. Additionally, the mobility calculation unit calculates an electrophoretic mobility U by dividing the electrophoretic velocity S by the electric field intensity. Subsequently, the mobility calculation unit calculates the zeta potential of the exosome or the specific binding substance-exosome complex using the above-described Smoluchowski equation.

When the sample is measured and analyzed using the above-described electrophoretic analysis chip 300, Joule heat is generated by applying a voltage between the electrodes 13 and 14. In the sample liquid, the measurement of the electrophoretic mobility in the phoresis flow path 33 through the sample liquid introduced into the liquid level adjusting flow path 15 may be affected by fluctuation (rise) of electrical conductivity due to the Joule heat or generation of an eddy current. Therefore, the influence on the measurement of electrophoretic mobility (the calculation of zeta potential) by providing the liquid level adjusting flow path 15 in the electrophoretic analysis chip 300 was confirmed.

Polystyrene particles (Thermo Fisher Scientific Inc. 3100A) having an average particle diameter of about 100 nm were used as the sample, and 10 mM of HEPES (4-(2-hydroxyethyl)-1-piperazineethanesulfonic acid; pKa=7.55 (20 °C) filtered with 0.02 $\mu$m) was used as the buffer solution.

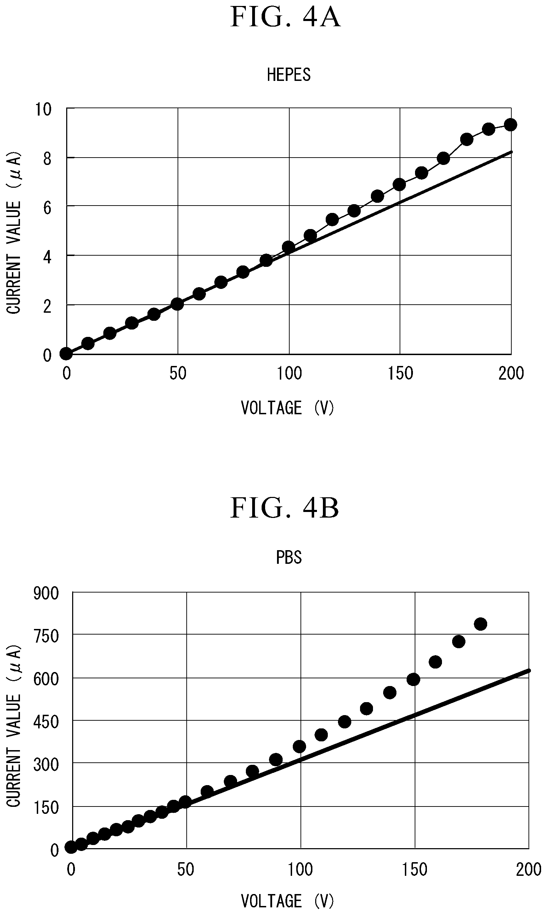

FIG. 4A is a view showing a relationship between a voltage and a current when the HEPES is energized. From the relationship shown in FIG. 4A, an electrical resistance value of the HEPES is about 24.4 M$\Omega$. On the other hand, FIG. 4B is a view showing the relationship between the voltage and the current when a phosphate buffer solution (Phosphate Buffered Saline, PBS) used as the buffer solution is energized. From the relationship shown in FIG. 4A, an electrical resistance value of PBS is about 0.32 M$\Omega$. The conductivity of HEPES is considered to be smaller than that of PBS because the electrical resistance value of HEPES is greater than that of PBS. When the conductivity of HEPES was measured, it was about 250 $\mu$S/cm in 10 mM of HEPES.

The electrophoretic mobility was measured using a parallel flow path type electrophoretic analysis chip including both the above-described liquid level adjusting flow path 15 and phoresis flow path 33, and a single flow path type electrophoretic analysis chip having only the phoresis flow path 33. First, a sample solution containing polystyrene particles having an average particle diameter of about 100 nm was introduced into the parallel flow path type electrophoretic analysis chip and the single flow path type electrophoretic analysis chip using a 1 mL syringe.

Next, the laser light processed into a planar shape is irradiated from the light irradiation unit 421 to the phoresis flow path 33 for each of the parallel flow path type electrophoretic analysis chip and the single flow path type electrophoretic analysis chip using a cylindrical lens, and the scattered light from the phoresis flow path 33 was observed by the detection unit 422. The observation of particles as a sample is performed in an electric field having an electric field intensity of 10 V/cm and in an electric field having an electric field intensity of 20 V/cm, respectively, and apparent electrophoretic mobility was determined for each of the electric field intensities.

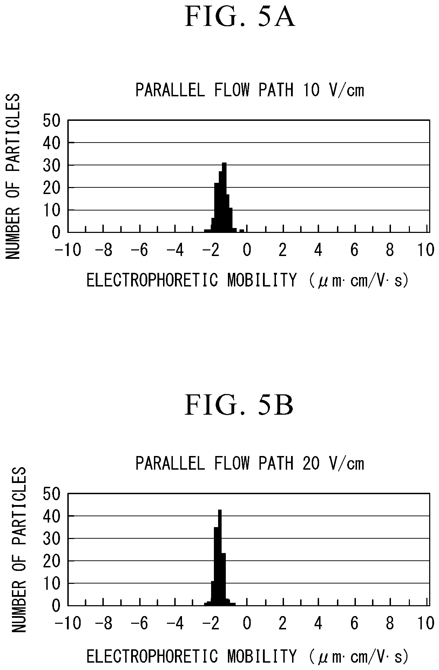

FIG. 5A is a view showing a relationship between the electrophoretic mobility and number of particles obtained from results observed in the electric field having an electric field intensity of 10 V/cm in the parallel flow path type electrophoretic analysis chip. FIG. 5B is a view showing the relationship between the electrophoretic mobility and number of particles obtained from the results observed in the electric field having an electric field intensity of 20 V/cm in the parallel flow path type electrophoretic analysis chip.

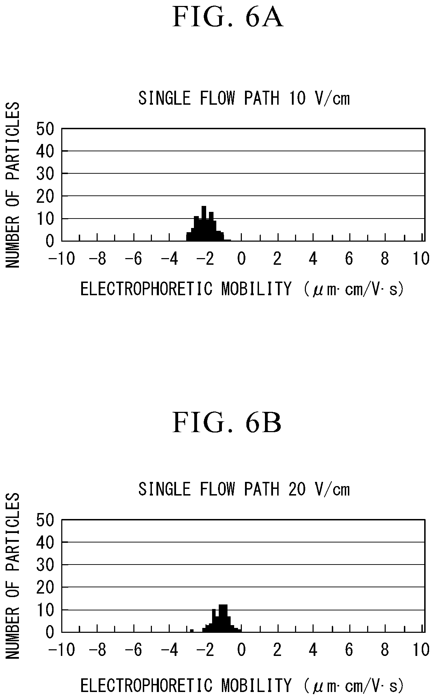

FIG. 6A is a view showing the relationship between the electrophoretic mobility and the number of particles obtained from the results observed in the electric field having an electric field intensity of 10 V/cm in the single flow path type electrophoretic analysis chip. FIG. 6B a view showing the relationship between the electrophoretic mobility and the number of particles (distribution) obtained from the results observed in the electric field having an electric field intensity of 20 V/cm in the single flow path type electrophoretic analysis chip.

As shown in FIGS. 5A, 5B, 6A and 6B, no change in an average value of the electrophoretic mobility was observed in all of the measurement results of the parallel flow path type and single flow path type electrophoretic analysis chips. That is, as in the electrophoretic analysis chip 300 of the embodiment, it was not observed that the measurement results of the electrophoretic mobility in the phoresis flow path 33 was affected by provision of the liquid level adjusting flow path 15.

Further, with regard to the influence on the measurement of the electrophoretic mobility (the calculation of the zeta potential) due to the provision of the liquid level adjusting flow path 15, confirmation is performed in a state in which an influence of an electro-osmotic flow at the time of applying a voltage between the electrode 13 and the electrode 14 is excluded. For this confirmation, the polystyrene particles having an average particle diameter of about 100 nm as described above and uncharged beads (manufactured by Otsuka Electronics Co., Ltd.) were used as samples.

First, a sample solution containing the polystyrene particles having an average particle diameter of about 100 nm was introduced into each of the parallel flow path type electrophoretic analysis chip and the single flow path type electrophoretic analysis chip using a 1 mL syringe. Next, the laser light processed into the above-described planar shape is irradiated from the light irradiation unit 421 to the phoresis flow path 33 for both types of electrophoretic analysis chips, and the scattered light from the phoresis flow path 33 was observed by the detection unit 422. The observation of particles as a sample was performed in an electric field having an electric field intensity of 10 V/cm, and the apparent electrophoretic mobility was obtained for each of both types of electrophoretic analysis chips.

Then, in each type of electrophoretic analysis chip, the sample liquid is removed from the flow path by a syringe operation, and similarly to the sample solution, a washing solution (for example, the HEPES of above 10 mM) was alternately introduced and removed plural times (for example, 3 to 4 times) in each of the flow paths by the syringe operation.

Thereafter, a sample liquid containing uncharged beads as a sample was introduced into each of the parallel flow path type electrophoretic analysis chip and the single flow path type electrophoretic analysis chip using a 1 mL syringe. Then, similarly to the case in which the sample is the polystyrene particles, the laser light processed into the planar shape was irradiated from the light irradiation unit 421 to the phoresis flow path 33, the scattered light from the phoresis flow path 33 was observed by the detection unit 422, and the apparent electrophoretic mobility was obtained for each of the both types of electrophoretic analysis chips.

Here, since an average value of the electrophoretic mobility obtained using the sample liquid containing uncharged beads is considered to be a flow rate of the electro-osmotic flow, the electrophoretic mobility of the polystyrene particles can be obtained without the influence of the electro-osmotic flow by subtracting the electrophoretic mobility obtained using the sample liquid containing uncharged beads from the electrophoretic mobility obtained using the sample liquid containing polystyrene particles.

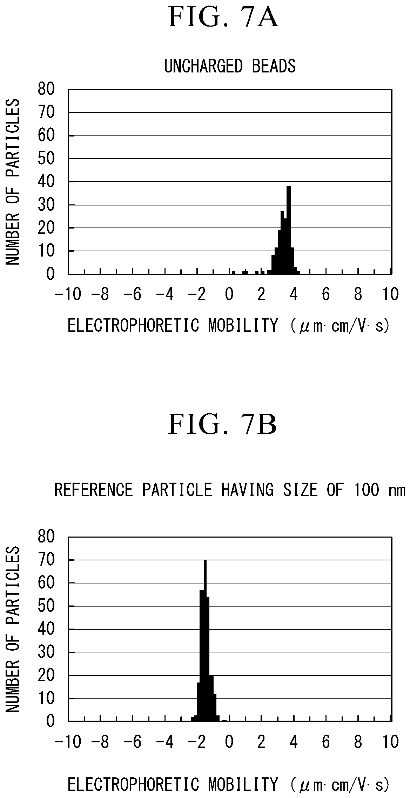

FIG. 7A is a view showing the relationship between the electrophoretic mobility and the number of particles obtained from the results observed in the case in which the uncharged beads are used as a sample in the parallel flow path type electrophoretic analysis chip. FIG. 7B is a view showing the relationship between the electrophoretic mobility and the number of particles obtained by subtracting the electrophoretic mobility obtained using the uncharged beads from the electrophoretic mobility obtained in the case in which the polystyrene particles of 100nm are used as a sample in the parallel flow path type electrophoretic analysis chip.

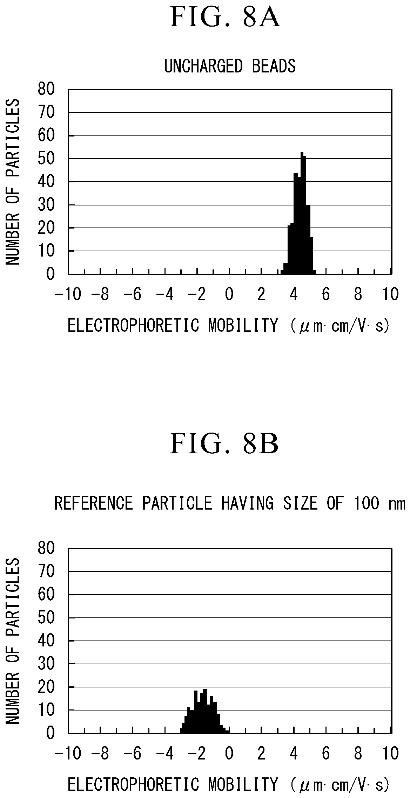

FIG. 8A is a view showing the relationship between the electrophoretic mobility and the number of particles obtained from the results observed in the case in which the uncharged beads are used as a sample in the single flow path type electrophoretic analysis chip. FIG. 8B is a view showing the relationship between the electrophoretic mobility and the number of particles, in which the electrophoretic mobility obtained using the uncharged beads was subtracted from the electrophoretic mobility obtained using the polystyrene particles of 100 nm as the sample, in the single flow path type electrophoretic analysis chip.

As shown in FIGS. 7A, 7B, 8A and 8B, in the parallel flow path type electrophoretic analysis chip, the electrophoretic mobility obtained using the uncharged beads was $3.1 \pm 0.5$ [$\mu$m. cm /V·s]. In the parallel flow path type electrophoretic analysis chip, the electrophoretic mobility obtained using the polystyrene particles was $1.7 \pm 0.3$ [$\mu$m·cm/V·s]. In the single flow path type electrophoretic analysis chip, the electrophoretic mobility obtained using the uncharged beads was $4.2 \pm 0.5$ [$\mu$m·cm/V·s]. In the single flow path type electrophoretic analysis chip, the electrophoretic mobility obtained using the polystyrene particles was $-1.8 \pm 0.3$ [$\mu$m·cm/V·s].

From the results, it is considered that the influence on the measurement of the electrophoretic mobility (the calculation of the zeta potential) by providing the liquid level adjusting flow path 15 is almost absent.

The zeta potential of the specific binding substance-exosome complex as well as the average value of the zeta potential of the specific binding substance-exosome complex can be measured at a single particle level by using the electrophoretic analysis chip 300 in the embodiment. Therefore, even when it is considered from the average value of zeta potential that the exosome having a molecule (for example, an antigen or the like) recognized by the specific binding substance is not present in the sample, it is possible to detect the exosome having the antigen which is present as a minor population.

As described above, since the liquid level adjusting flow path 15 having a larger cross-sectional area than the cross-sectional area of the phoresis flow path 33 is provided in the electrophoretic analysis chip 300 and the electrophoretic analysis apparatus 400 in the embodiment, it is possible to adjust so that the difference in liquid level between the sample liquid held in the first reservoir 11 and the sample liquid held in the second reservoir 21 is eliminated in a short amount of time by introducing the sample liquid into the liquid level adjusting flow path 15. Therefore, in the electrophoretic analysis chip 300 and the electrophoretic analysis apparatus 400 in the embodiment, it is possible to minimize a measurement error of the electrophoretic mobility caused by the difference in liquid level of the sample liquid held in the first and second reservoirs 11 and 21, and it is possible to analyze a sample in a short amount of time with high accuracy.

Further, in the electrophoretic analysis chip 300 and the electrophoretic analysis apparatus 400 in the embodiment, although the influence of Joule heat generated by applying a voltage between the electrodes 13 and 14 may affect the measurement result of the electrophoretic mobility in the phoresis flow path 33 through the sample liquid introduced into the liquid level adjusting flow path 15, since HEPES with a conductivity of 17800 $\mu$S/cm or less and high resistance is used as the buffer solution contained in the sample solution, it is possible to limit an adverse effect on the measurement of the electrophoretic mobility in the phoresis flow path 33 which occurs with the current application to the electrodes 13 and 14.

Further, in the electrophoretic analysis chip 300 and the electrophoretic analysis apparatus 400 in the embodiment, since the phoresis flow path 33 is disposed closer to the light irradiation unit 421 than the line segment connecting the centers of the first reservoir 11 and the second reservoir 21, an optical path length of the laser light radiated toward the phoresis flow path 33 can be shortened. Thus, in the electrophoretic analysis chip 300 and the electrophoretic analysis apparatus 400 in the embodiment, an output of the laser light can be made low, the scattered light which is generated from things other than the sample can be minimized, and the analysis accuracy can be improved.

Further, in the electrophoretic analysis chip 300 and the electrophoretic analysis apparatus 400 in the embodiment, since the phoresis flow path 33 and the liquid level adjusting flow path 15 are disposed to be dislocated in the height direction (the Z direction), the scattered light is generated in the sample liquid in the liquid level adjusting flow path 15 due to the irradiation of the laser light transmitted through the phoresis flow path 33 and can be prevented from being detected as noise by the detection unit 422, and the analysis accuracy can also be improved.

Although the preferred embodiment according to the present invention have been described above with reference to the accompanying drawings, the present invention is not limited thereto. The shapes, combinations, and the like of the constituent elements shown in the above-described embodiment are merely examples, and various changes can be made based on design requirements and the like without departing from the spirit of the present invention.

Although the above-described embodiment has exemplified the constitution which uses HEPES as the buffer solution of which conductivity is 17800 $\mu$S/cm or less, it is not limited thereto. Another liquid may be used as the buffer solution as long as the conductivity is 17800 $\mu$S/cm or less.

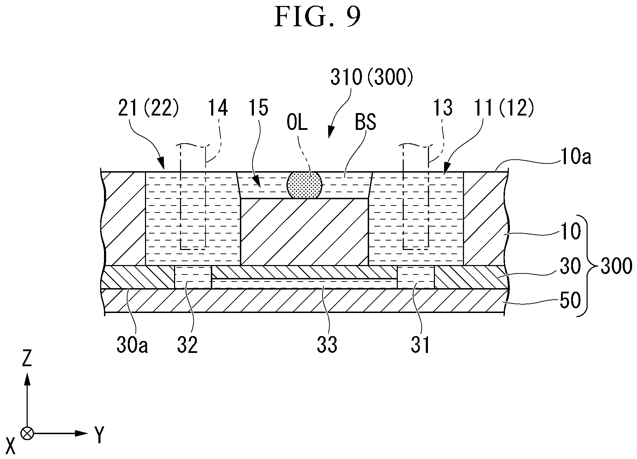

Further, in the above-described embodiment, although the influence of Joule heat generated by applying a voltage between the electrodes 13 and 14 is limited using a buffer solution having a high electric resistance, the present invention is not limited to such a constitution. For example, as shown in FIG. 9, a second liquid OL having an electrical resistance higher than that of the buffer solution BS may be disposed at a position sandwiched by the buffer solution BS in the liquid level adjusting flow path 15. In FIG. 9, for convenience, the liquid level adjusting flow path 15 and the phoresis flow path 33 are shown in the same cross section. An oil agent such as silicon-based oil or fluorine-based oil can be used as the second liquid OL.

The second liquid OL preferably has a viscosity which is movable in the Y direction by a pressure generated in the sample liquid in the liquid level adjusting flow path 15 according to the difference in liquid level between the sample liquid held in the first reservoir 11 and the sample liquid held in the second reservoir 21. The viscosity of the second liquid OL may be set according to a ratio of a flow conductance in the liquid level adjusting flow path 15 to a flow conductance in the phoresis flow path 33. Specifically, when a ratio of the cross-sectional area of the liquid level adjusting flow path 15 to the cross-sectional area of the phoresis flow path 33 is R, the viscosity of the second liquid OL may be achieved by a liquid of which a ratio to the viscosity of the buffer solution is less than R. It is possible for the buffer solution to flow in the liquid level adjusting flow path 15 with a conductance larger than that in the phoresis flow path 33 by using the second liquid OL having a viscosity in such a range. Further, it is not necessary to use the buffer solution having a high electric resistance by interposing the second liquid OL having a high electric resistance in the buffer solution in the liquid level adjusting flow path 15. Therefore, for example, it is possible to use a buffer solution having low electrical resistance such as PBS described above, and versatility is expanded.

When the second liquid OL is disposed at a position sandwiched by the buffer solution BS in the liquid level adjusting flow path 15, the cover which covers the opening portion of the first holding space 12, the opening portion of the second holding space 22, and the liquid level adjusting flow path 15 preferably seals the liquid level adjusting flow path 15.

Further, in the above-described embodiment, although the constitution in which the axial electrodes 13 and 14 are respectively disposed in the first reservoir 11 and the second reservoir 21 in the Z direction has been exemplified, the present invention is not limited thereto. For example, it may be constituted to be provided at the bottom of the first holding space 31 and the bottom of the second holding space 32 in the substrate 50. It is possible to minimize the influence on the sample liquid of the liquid level adjusting flow path 15 with the current application to the electrode by disposing the electrode at a position away from the liquid level adjusting flow path 15.

Moreover, in the above-described embodiment, although the constitution in which the cross section of the liquid level adjusting flow path 15 has a V shape has been exemplified, the present invention is not limited thereto. The cross-sectional shape of the liquid level adjusting flow path 15 may be, for example, a polygon such as a rectangular shape. The cross-sectional shape of the liquid level adjusting flow path 15 is preferably a shape in which a contact area with the liquid level adjusting flow path 15 is small to increase the flow conductance of the sample liquid, and more preferably a semicircular shape including an arc, as an example.

Moreover, in the above-described embodiment, although the constitution in which the phoresis member has the structure in which the reservoir member 10 and the flow path member 30 are laminated has been exemplified, the present invention is not limited thereto. As the phoresis member, for example, the first reservoir 11, the first holding space 12, the second reservoir 21, the second holding space 22, the phoresis flow path 33, and the liquid level adjusting flow path 15 may be provided on a single base material and then may be supported by the substrate 50.

[Industrial Applicability]

The present invention is applicable to an electrophoretic analysis chip and an electrophoretic analysis apparatus.

[Reference Signs List]

> 10 Reservoir member
> 11 First reservoir
> 12 First holding space
> 13, 14 Electrode
> 15 Liquid level adjusting flow path
> 21 Second reservoir
> 22 Second holding space
> 30 Flow path member
> 33 Phoresis flow path
> 50 Substrate
> 300 Extracellular vesicle analysis chip (electrophoretic analysis chip)
> 400 Electrophoretic analysis apparatus
> 420 Measurement unit
> OL Second liquid

**Claims**

1. An electrophoretic analysis chip comprising:

> a first reservoir and a second reservoir provided on a base material;
> a phoresis flow path through which the first reservoir and the second reservoir are connected and in which phoresis of a sample is enabled; and
> a liquid level adjusting flow path which has a cross-sectional area larger than that of the phoresis flow path and is capable of adjusting a difference in liquid levels between a liquid held in the first reservoir and a liquid held in the second reservoir by connecting the first reservoir with the second reservoir.

2. The electrophoretic analysis chip according to claim 1, wherein a conductivity of the liquid is 17800 $\mu$S/cm or less.

3. The electrophoretic analysis chip according to claim 1 or 2, wherein a second liquid having electrical resistance larger than that of the liquid and a viscosity of which a ratio with a viscosity of the liquid is less than a ratio of a cross-sectional area of the liquid level adjusting flow path to a cross-sectional area of the phoresis flow path is disposed at a position sandwiched by the liquid in the liquid level adjusting flow path.

4. The electrophoretic analysis chip according to claim 3, wherein the second liquid is an oil agent.

5. The electrophoretic analysis chip according to any one of claims 1 to 4, wherein, in a plan view, the phoresis flow path connects the first reservoir with the second reservoir at a position separated from a line segment connecting a center of the first reservoir with a center of the second reservoir.

6. The electrophoretic analysis chip according to any one of claims 1 to 5, wherein the phoresis flow path and the liquid level adjusting flow path are disposed to be dislocated at positions not overlapping in a height direction.

7. The electrophoretic analysis chip according to any one of claims 1 to 6, wherein a cross-sectional shape of the liquid level adjusting flow path includes an arc.

8. The electrophoretic analysis chip according to any one of claims 1 to 7, wherein the sample includes an extracellular vesicle, or a specific binding substance-extracellular vesicle complex formed by interacting a specific binding substance specifically binding to a molecule present on a surface of the extracellular vesicle with the extracellular vesicle.

9. An electrophoretic analysis chip which analyzes a sample, comprising:

> a laminated structure constituted by a phoresis member having a first reservoir, a second reservoir and a phoresis flow path which connects the first reservoir with the second reservoir and in which phoresis of the sample is performed, and a substrate which supports the phoresis member,
> wherein the phoresis member has a liquid level adjusting flow path which has a cross-sectional area larger than that of the phoresis flow path and is capable of adjusting a difference in liquid levels between a liquid held in the first reservoir and a liquid held in the second reservoir by connecting the first reservoir with the second reservoir.

10. The electrophoretic analysis chip according to claim 9, wherein the phoresis member has a laminated structure constituted by a reservoir member having the first reservoir, the second reservoir and the liquid level adjusting flow path, and a flow path member having the phoresis flow path and supported by the substrate.

11. An electrophoretic analysis apparatus comprising:

the electrophoretic analysis chip according to any one of claims 1 to 10; and
a measurement unit which measures a zeta potential of the sample.

12. The electrophoretic analysis apparatus according to claim 11, wherein:

the measurement unit has a light irradiation unit which is configured to irradiate the phoresis flow path with light, and
the phoresis flow path and the liquid level adjusting flow path are disposed at positions not overlapping in a light irradiation direction.

13. The electrophoretic analysis apparatus according to claim 11 or 12, wherein:

the measurement unit has the light irradiation unit which is configured to irradiate the phoresis flow path with light, and
the phoresis flow path connects the first reservoir with the second reservoir at a position closer to the light irradiation unit than a line section connecting a center of the first reservoir with a center of the second reservoir.

# FIG. 1A

## FIG. 1B

# FIG. 2

# FIG. 3

# FIG. 4A

HEPES

# FIG. 4B

PBS

# FIG. 5A

PARALLEL FLOW PATH 10 V/cm

# FIG. 5B

PARALLEL FLOW PATH 20 V/cm

## FIG. 6A

SINGLE FLOW PATH 10 V/cm

## FIG. 6B

SINGLE FLOW PATH 20 V/cm

# FIG. 7A

UNCHARGED BEADS

# FIG. 7B

REFERENCE PARTICLE HAVING SIZE OF 100 nm

# FIG. 8A

UNCHARGED BEADS

# FIG. 8B

REFERENCE PARTICLE HAVING SIZE OF 100 nm

# FIG. 9

## INTERNATIONAL SEARCH REPORT

International application No.

PCT/JP2018/004621

**A. CLASSIFICATION OF SUBJECT MATTER**
Int.Cl. G01N27/447(2006.01)i, G01N37/00(2006.01)i

According to International Patent Classification (IPC) or to both national classification and IPC

**B. FIELDS SEARCHED**

Minimum documentation searched (classification system followed by classification symbols)
Int.Cl. G01N27/447, G01N27/28, G01N37/00, G01N33/483, G01N33/53, G01N15/00-15/14, G01N1/10

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)
JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2016-24021 A (THE UNIVERSITY OF TOKYO) 08 February 2016, entire text, all drawings (Family: none) | 1-13 |
| A | JP 2012-230004 A (OTSUKA ELECTRONICS CO., LTD.) 22 November 2012, entire text, all drawings & US 8999131 B2, entire text, all drawings & WO 2012/147426 A1 | 1-13 |
| A | JP 2000-314719 A (SHIMADZU CORP.) 14 November 2000, entire text, all drawings (Family: none) | 1-13 |

☒ Further documents are listed in the continuation of Box C.  ☐ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 19 March 2018 (19.03.2018) | 03 April 2018 (03.04.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/004621

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2013-195240 A (SHIMADZU CORP.) 30 September 2013, entire text, all drawings (Family: none) | 1-13 |
| A | WO 2015/163194 A1 (THE UNIVERSITY OF TOKYO) 29 October 2015, entire text, all drawings (Family: none) | 1-13 |
| A | WO 2014/030590 A1 (THE UNIVERSITY OF TOKYO) 27 February 2014, entire text, all drawings & US 2015/0168400 A1, whole document & EP 2889623 A1 | 1-13 |
| A | WO 2016/171198 A1 (THE UNIVERSITY OF TOKYO) 27 October 2016, entire text, all drawings (Family: none) | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017037652 A

- US 5482608 A